# EUROPÄISCHE PATENTANMELDUNG

(11) **EP 2 101 092 A1**
(43) Veröffentlichungstag der Anmeldung: **16.09.2009**
(21) Anmeldenummer: 08152560.2
(22) Anmeldetag: 11.03.2008
(51) Int. Cl.: F16K 11/078, F16K 99/00

(54) **Flüssigkeitssteuerungseinrichtung für Mikrodurchflusssystem**

(71) Anmelder: Qiagen GmbH, 40724 Hilden (DE)
(72) Erfinder: Himmelreich, Dr. Ralf, 40764, Langenfeld (DE)
(74) Vertreter: Gille Hrabal Struck Neidlein Prop Roos

(57) **Zusammenfassung**

Die Erfindung betrifft ein technisches Bauteil (1) für ein Mikrodurchflusssystem, mit dem der Transport einer Flüssigkeit innerhalb eines Mikrodurchflusssystems gesteuert werden kann.
Aufgabe der Erfindung ist es, ein kleines und vielfältiges Bauteil für ein Mikrodurchflusssystem bereitzustellen.
Zur Lösung der Aufgabe wird ein Bauteil (1) mit Ventilelement für das Öffnen und Schließen eines Kanals (3,4,5) bereitgestellt, das über wenigstens einen Durchlass (9,10) verfügt Der Durchlass (9,10) bewirkt das Öffnen oder Schließen von wenigstens einem Kanal (3,4,5). Das Ventilelement kann wie von Drehventilen her bekannt gedreht werden, um wenigstens einen Kanal zu öffnen oder zu verschließen. Darüber hinaus ist das Ventilelement derart verschiebbar ausgestaltet, dass durch das Verschieben ebenfalls wenigstens ein Kanal (3,4,5) geöffnet oder geschlossen werden kann.

## Beschreibung

Die Erfindung betrifft ein technisches Bauteil für ein Durchflusssystem, insbesondere für ein Mikrodurchflusssystem, mit dem der Transport einer Flüssigkeit innerhalb eines Mikrodurchflusssystems gesteuert werden kann. Ein solches Bauteil ist aus der Druckschrift DE 102 27 593 A1 bekannt. Die Erfindung betrifft ferner ein Verfahren für den Betrieb des Durchflusssystems.

Ein Mikrodurchflusssystem ist eine Vorrichtung mit Kanälen, deren Durchmesser kleiner als 1 mm ist. Insbesondere sind die Kanaldurchmesser maximal 150 µm groß. Ein solches Mikrodurchflusssystem wird in der Regel unter Anwendung von Halbleitertechniken hergestellt. Es ist daher auch bekannt, Halbleiter als Material zu wählen, um Kanäle zu fertigen. Aber auch andere Materialien wie Polymere oder Glas können eingesetzt werden. Ein Mikrodurchflusssystem im Sinne der vorliegenden Erfindung umfasst dann Kanäle und Bauteile, die in ein Substrat integriert sind. Aus der Druckschrift US 7,144,616 B1 geht ein solches Mikrodurchflusssystem hervor.

In der pharmazeutischen Industrie werden täglich mehrere hunderttausend verschiedene Substanzen auf ihre Eignung als Ausgangsstoffe für neue Medikamente untersucht. Derartige Anforderungen haben zur Konsequenz, dass Bedarf für Mikrodurchflusssysteme besteht, mit denen kleinste Flüssigkeitsmengen präzise gehandhabt werden können. Mikrodurchflusssysteme werden auch in der industriellen Verfahrenstechnik eingesetzt, um kleinste Flüssigkeitsmengen schnell und gleichmäßig miteinander zu vermischen. Auf biochemischen Gebiet werden Mikrosysteme für die Analyse von biologischen Proben verwendet.

Mikrodurchflusssysteme sind sehr klein und werden zunehmend kleiner gebaut. Die eingesetzten Bauteile müssen entsprechend klein sein. Es besteht daher ein ständiger Bedarf an einer weiteren Miniaturisierung der verwendeten Bauteile.

Ein Bauteil für das Öffnen und Schließen eines Kanals ist aus der Druckschrift JP 20061 8381 8 A oder aus der Druckschrift US 6,981,518 B2 bekannt. Gemäß der Druckschrift US 6,981,151 B2 wird ein Ventilelement mit Hilfe eines Hebels linear verfahren, um einen Kanal zu öffnen oder zu verschließen. Die lineare Bewegung wird mit einem Piezoelement erzeugt. Ein Magnet dient dazu, das Ventilelement in der Schließstellung zu halten.

Verschiedene Bauteile für Mikrodurchflusssysteme werden in der Druckschrift "Chunsun Zhang et al., Micropumps. Microvalves, and micromixers within PCR microfluid chips: Advances and trends, Biotechnology Advances 25 (2007) 483 - 514, Elsevier" beschrieben. Aus dieser Druckschrift geht ein Bauteil hervor, welches dem Öffnen und Verschließen eines Kanals eines Mikrodurchflusssystems dient. Das Bauteil umfasst eine Führung und einem in der Führung geführten Ventilelement. Durch eine lineare Bewegung wird der an die Führung angeschlossene Kanal geöffnet oder geschlossen.

Allerdings weisen die vorbekannten Bauteile den Nachteil auf, dass durch eine lineare Bewegung nur ein Kanal geöffnet oder geschlossen werden kann. Soll bei einem Mikrodurchflusssystem umgeschaltet werden, also ein Kanal geschlossen werden und ein weiterer Kanal geöffnet werden, so sind nach dem Stand der Technik zwei Ventilelemente erforderlich sowie zwei Antriebe für das jeweilige Ventilelement. Komplexere Systeme erfordern also einen entsprechend größeren technischen Aufwand bzw, entsprechend mehr Bauteile, um ein Mikrodurchflusssystem steuern zu können.

Einen Überblick über vorbekannten Ventile für mikrofluidische Durchflusssysteme findet sich ergänzend in J. Micromech. Microeng. 16 (2006) R13-R39, A review of microvalves, Kwang W Oh et al..

Vielfach besteht bei Mikrodurchflusssystemen auch der Bedarf, eine erste Flüssigkeit dosiert einer zweiten Flüssigkeit zuzufügen. Nach dem Stand der Technik ist dafür ein entsprechendes System an Leitungen und weiteren Bauteilen erforderlich, um eine solche Dosierung vorzunehmen.

Aus der Druckschrift WO 2004/105829 A2 geht eine Vorrichtung hervor, die eine Mehrzahl an Drehventilen umfasst, um so verschiedene Zu- und Ableitungen miteinander zu verbinden. Eine Mehrzahl solcher Drehventile sind für den Einsatz bei einem Mikrodurchflusssystem ungeeignet, da diese relativ viel Platz benötigen.

Aus der WO 2007/130951 A2 ist ein Ventil bekannt, welches ein drehbares Ventilelement aufweist, das sich in einer Führung befindet. Das Ventilelement ist mit Durchlässen versehen und dient dem Verbinden von Kanalabschnitten, die in die Führung einmünden. Verschiedene Schaltzustände sind möglich. Allerdings verbleibt im Ventilelement stets Flüssigkeit, die zuvor durch das Ventilelement hindurch geleitet wurde. Wird ein anderer Schaltzustand hergestellt, so gelingt dies aufgrund der verbliebenen Flüssigkeit nicht kontaminationsfrei. Auch ist die Zahl der möglichen Schaltzustände relativ begrenzt. Das Ventilelement weist eine relativ komplizierte, innere Geometrie auf und ist entsprechend aufwändig zu fertigen.

Aufgabe der Erfindung ist es, ein kleines und vielfältiges Bauteil für ein Durchflusssystem bereitzustellen.

Zur Lösung der Aufgabe wird ein Bauteil mit Ventilelement für das Öffnen und Schließen eines Kanals bereitgestellt, das über wenigstens einen Durchlass verfügt. Der Durchlass bewirkt das Öffnen oder Schließen von wenigstens einem Kanal. Das Ventilelement kann wie von Drehventilen her bekannt gedreht werden, um wenigstens einen Kanal zu öffnen oder zu verschließen. Darüber hinaus ist das Ventilelement derart verschiebbar ausgestaltet, dass durch das Verschieben ebenfalls wenigstens ein Kanal geöffnet oder geschlossen werden kann.

Indem das mit wenigstens einem Durchlass versehene Ventilelement nicht nur gedreht, sondern auch verschoben werden kann, um so Kanäle zu öffnen oder zu verschließen, wird der Platzbedarf reduziert, um eine Mehrzahl von Kanälen öffnen und schließen zu können.

Das Ventilelement befindet sich in einer Ausführungsform in einer Führung. Wände der Führung grenzen vorzugsweise derart an das Ventilelement an, dass keine Flüssigkeit hindurchtreten kann. Erreicht wird diese flüssigkeitsdichte Verbindung insbesondere durch eine Presspassung zwischen Führung und Ventilelement und/ oder durch geeignete Materialwahl. Die Führung verfügt ferner über Anschlüsse für Kanäle bzw. Kanalabschnitte, die insbesondere Teil eines Mikrodurchflusssystems sind. Das Ventilelement ist so beschaffen, dass durch eine lineare Bewegung mittels Durchlass wenigstens ein Kanal, vorzugsweise wenigstens zwei Kanäle eines angeschlossenen Durchflusssystems geöffnet und geschlossen werden können. Unter Öffnen eines Kanals ist dann zu verstehen, dass zwei Kanalabschnitte des Kanals in die Führung einmünden und mit Hilfe des Durchlasses im Ventilelement die Möglichkeit des Fließens einer Flüssigkeit von dem einen Kanalabschnitt in den anderen Kanalabschnitt ermöglicht wird. Umgekehrt kann eine solche Durchflussmöglichkeit durch das Ventilelement verhindert werden, um einen Kanal eines angeschlossenen Durchflusssystems zu schließen, In analoger Weise können in die Führung einmündende Kanalabschnitte durch Drehen des Ventilelements miteinander so verbunden werden, dass Flüssigkeit von einem Kanalabschnitt in einen anderen fließen kann. Umgekehrt kann eine solche Verbindung zweier Kanalabschnitte durch Drehen des Ventilelements aufgehoben werden.

Da mit nur einem solchen Bauteil mehrere Kanäle geöffnet sowie geschlossen werden können, wird der Platzbedarf reduziert, um zwei und mehr Kanäle im Vergleich zu dem Fall zu steuern, bei dem für jeden Kanal ein eigenes Bauteil erforderlich ist, um einen Flüssigkeitstransport durch einen Kanal hindurch zu ermöglichen oder zu unterbrechen.

Beispielsweise ist das Ventilelement in einem ersten Schritt so positioniert, dass ein erster Kanal geöffnet, aber ein zweiter Kanal durch das Ventilelement verschlossen ist. Wird das Ventilelement nun mit seinem Durchlass in Richtung des zweiten Kanals bewegt, so wird der erste Kanal dadurch verschlossen und der zweite Kanal schließlich dadurch geöffnet. Gleichzeitig gelingt es so, ein Fluid vom ersten Kanal in den zweiten hinein zu transportieren.

Soll kontaminationsfrei ein erster Kanal verschlossen und ein zweiter Kanal geöffnet werden, so umfasst das Ventilelement wenigstens zwei voneinander getrennte Durchlässe. Es gibt also keine flüssigkeitsleitende Verbindung zwischen den beiden Durchlässen. Beispielsweise ist eine Anfangssituation so, dass ein erster Kanal geöffnet ist, weil ein erster Durchlass des Ventilelements zwei Kanalabschnitte des ersten Kanals miteinander verbindet. Wird nun das Ventilelement bewegt, so sind die Kanäle so angeordnet, dass durch die Bewegung der erste Kanal verschlossen wird und der zweite Kanal durch den zweiten Durchlass geöffnet wird. Auf diese Weise gelingt es, kontaminationsfrei den zweiten Kanal zu öffnen und den ersten zu verschließen.

Vorzugsweise bilden in einer Ausgestaltung der Erfindung die Führung sowie das Ventilelement gemeinsam einen Durchlass. Die Führung, in der sich das Ventilelement befindet, bildet dann eine Wand des Durchlasses. Eine seitliche Ausnehmung des Ventilelements bildet dann die weiteren Wände des Durchlasses. Dies ermöglicht es, auf preiswerte Art und Weise komplexere Steuerungen von Durchflüssen zu ermöglichen. Soll beispielsweise über Eck miteinander flüssigkeitsleitend verbunden werden, so ist es fertigungstechnisch sehr aufwändig, ein Ventilelement mit einem entsprechend gebogenen Kanal zu fertigen, der durch das Ventilelement hindurch führt. Einfacher ist es, das Ventilelement seitlich mit einer Ausnehmung zu versehen, die den Durchlass bildet bzw. teil des Durchlasses ist. Kanäle des Mikrodurchflusssystems können nun über Eck so zum Ventilelement hinführen, dass diese schließlich in die Ausnehmung einmünden, wenn das Ventilelement geeignet positioniert ist. Insgesamt ist es so preiswert möglich, komplizierte Verschaltungen bzw, geometrisch komplizierte Verbindungen zu ermöglichen.

In einer Ausgestaltung der Erfindung umfasst das Ventilelement wenigstens eine längliche, rinnenartige Ausnehmung, die parallel zur Drehachse verläuft. Darüber hinaus gibt es wenigstens zwei Kanalabschnitte, die durch die längliche Ausnehmung flüssigkeitsleitend miteinander verbunden werden können. Durch eine Drehbewegung und/ oder eine Verschiebebewegung kann dann die flüssigkeitsleitende Verbindung hergestellt oder unterbrochen werden, Indem wenigstens zwei unterschiedliche Bewegungen möglich sind, um eine solche flüssigkeitsleitende Verbindung herzustellen oder zu unterbrechen, kann die zur Verfügung stehende Auswahl einer Bewegung zugleich dazu genutzt werden, um zugleich andere Schaltzustände bzw. Verbindungen zu schaffen. Beispielsweise kann wenigstens ein dritter Kanalabschnitt so angeordnet sein, dass durch Verschieben des Ventilelements nicht nur eine bestehende flüssigkeitsleitende Verbindung zwischen den vorgenannten beiden Kanalabschnitten unterbrochen, sondern zugleich der dritte Kanalabschnitt flüssigkeitsleitend mit einem anderen Kanalabschnitt verbunden wird. Wird alternativ die bestehende flüssigkeitsleitende Verbindung durch eine Drehbewegung unterbrochen, so wird dann nicht eine flüssigkeitsleitende Verbindung zwischen dem dritten Kanalabschnitt und dem weiteren Kanalabschnitt hergestellt.

Ein Substrat eines Mikrodurchflusssystems weist in der Regel eine relativ große Grundfläche auf, ist aber relativ schmal. In einer Ausgestaltung der Erfindung münden daher bevorzugt eine Mehrzahl von Kanalabschnitten in eine Führung für ein Ventilelement so ein, dass die Einmündungen der verschiedenen Kanalabschnitte sich dann auf einer (gedachten) geraden Linie befinden, die parallel zur Drehachse des Ventilelements verläuft. Der Durchmesser des Ventilelements kann bei dieser Anordnung klein und damit in einem relativ dünnen Substrat untergebracht sein.

In einer Ausgestaltung der Erfindung münden eine Mehrzahl von Kanalabschnitten in eine Führung für ein Ventilelement so ein, dass die Einmündungen der verschiedenen Kanalabschnitte sich dann auf einer ersten geraden (gedachten) Linie befinden, die parallel zur Drehachse des Ventilelements verläuft. Darüber hinaus gibt es weitere Kanalabschnitte, die in die Führung für ein Ventilelement so einmünden, dass die Einmündungen der weiteren Kanalabschnitte sich dann auf einer zweiten geraden (gedachten) Linie befinden, die parallel zur Drehachse des Ventilelements verläuft. Die erste gerade Linie weist einen Abstand zur zweiten geraden Linie auf. Um dennoch mit einem Ventilelement auskommen zu können, das einen relativ kleinen Durchmesser aufweist, ist jede Einmündung entlang der ersten geraden Linie versetzt gegenüber jeder Einmündung angeordnet, die in die zweite gerade Linie einmünden. Um den Platzbedarf auf diese Weise zu minimieren, gibt es in einer besonders bevorzugten Ausführungsform wenigstens drei benachbart angeordnete Einmündungen, die die Ecken eines gleichseitigen Dreiecks bilden.

In einer Ausgestaltung der Erfindung weist das Ventilelement wenigstens eine Ausnehmung für das Verbinden von wenigstens zwei Kanalabschnitten auf, die länglich ist, aber nicht parallel zur Drehachse des Ventilelements verläuft. Mit einer solchen Ausnehmung können dann Kanalabschnitte miteinander verbunden werden, die nicht gemeinsam auf einer Linie einmünden, die parallel zur Drehachse verläuft. Vorzugsweise verläuft diese Ausnehmung schräg unter Bildung eines 45°-Winkels relativ zur Drehachse des Ventilelements, um damit zwei Einmündungen von Kanalabschnitten miteinander verbinden zu können, die Teil der Ecken des genannten gleichseitigen Dreiecks sind.

Vorzugsweise umfasst das Ventilelement eine Vielzahl von verschiedenen Ausnehmungen, um so sehr viele verschiedene Verbindungen wahlweise zugleich oder unabhängig voneinander herstellen oder unterbrechen zu können.

In einer Ausgestaltung der Erfindung umfasst das Ventilelement einen Entlüftungskanal. Hierunter ist ein Kanal zu verstehen, der mit Kanälen des Mikrodurchflusssystems auf der einen Seite verbunden werden kann und auf der anderen Seite nach außen führt. Dieser Entlüftungskanal ist vorzugsweise mit einem Filter oder einer semipermeablen Membran verschlossen, wobei die semipermeable Membran insbesondere so beschaffen ist, dass Gase hindurch treten können, nicht aber Flüssigkeit. Bei Mikrodurchflusssystemen besteht vielfach der Bedarf, Kanäle zu entlüften. Zu diesem Zweck wird Luft durch Kanäle hindurch gepumpt. Mikrodurchflusssysteme umfassen nach dem Stand der Technik vielfach separate Ventilelemente, um eine Entlüftung durchführen zu können. Die vorliegende Erfindung ermöglicht es, bereits in dem beanspruchten Bauteil einen solchen Entlüftungskanal vorzusehen, um separate Entlüftungskanäle nebst Ventilelement entfallen zu lassen.

Insbesondere, wenn nur wenige Schaltzustände vorgesehen sind, umfasst das Bauteil nach der vorliegenden Erfindung Anschläge, gegen die das Ventilelement gefahren wird, um von einer Schaltstellung in eine andere zu gelangen. Gibt es viele verschiedene Schaltstellungen, so ist es allerdings vielfach einfacher, über die entsprechende Bewegung, also beispielsweise das Hin- und Herfahren des Ventilelements die verschiedenen Schaltzustände anzufahren. Unter einem Schaltzustand ist das Schließen oder Öffnen eines Kanals zu verstehen. Wird durch eine lineare Bewegung zugleich ein Kanal verschlossen und ein anderer geöffnet, so handelt es sich um einen Schaltzustand im Sinne der vorliegenden Erfindung. Das Vorsehen von Anschlägen für ein Ventilelement vereinfacht den Aufbau und sichert einen störungsfreien Betrieb.

In einer Ausgestaltung der Erfindung wird das erfindungsgemäße Bauteil mit anderen Techniken für das Öffnen und Schließen von Kanälen kombiniert. Es wird beispielsweise Hydrogel, Wachs oder eine Membran in den Durchlässen eingesetzt, um zum Beispiel eine Zeitkomponente zu ermöglichen, In einer Ausführungsform wird ein Durchlass des erfindungsgemäßen Bauteils mit einem Hydrogel verschlossen. Erst ab einer bestimmten Temperatur der zu handhabenden Flüssigkeit oder der Umgebung öffnet dann der Durchlass mit dem darin befindlichen Hydrogel. Ist ein Durchlass zunächst mit Wachs verschlossen, so kann dieser Durchlass ebenfalls temperaturgesteuert geöffnet werden, Ist ein Durchlass durch eine Membran verschlossen, so kann dieser Durchlass druckgesteuert geöffnet werden, Es kann so in Abhängigkeit vom Systemdruck geöffnet werden. Eine weitere Besonderheit des beanspruchten Bauteils besteht also darin, dass eine Kombination mit den genannten anderen Techniken realisiert werden kann, ohne das Bauteil besonders anpassen oder vergrößern zu müssen.

In einer Ausgestaltung der Erfindung ist das Bauteil Teil eines Mikrodurchflusssystems, welches in ein Substrat mit relativ großer Grundfläche im Vergleich zur Dicke eingearbeitet ist. Das Substrat umfasst Kanäle bzw. Kanalabschnitte, ein Ventilelement mit Durchlässen und eine Führung für das Ventilelement. Die Drehachse des Ventilelements verläuft parallel zur Grundfläche des Substrats, um so hinreichend Platz zu haben, um das Ventilelement auch hinreichend weit verschieben, also linear bewegen zu können.

Das vorgenannte Substrat umfasst vorzugsweise keine Antriebsmittel für das Drehen oder Verschieben des Ventilelements. Statt dessen gibt es eine davon getrennte Vorrichtung, in die das Substrat eingesetzt oder mit der das Substrat verbunden werden kann. Die getrennte Vorrichtung umfasst Antriebsmittel und zwar insbesondere einen zum Beispiel per Motor verfahrbaren Schlitten und/ oder wenigstens einen Stell- oder Schrittmotor, der sich beispielsweise auf dem Schlitten befindet, Im eingesetzten bzw. verbundenen Zustand wird das Ventilelement beispielsweise mit dem Stell-oder Schrittmotor verbunden und mit Hilfe der getrennten Vorrichtung automatisiert definiert gedreht und/ oder definiert verschoben. Beispielsweise durch Verschieben des Schlittens wird das Ventilelement verschoben. Mit Hilfe des Stell- oder Schrittmotors wird das Ventilelement geeignet weit gedreht. Diese Ausgestaltung ermöglicht es, nur einmal einen relativ teuren Antrieb in Form der getrennten Vorrichtung bereitstellen zu müssen, um damit viele verschiedene Mikrodurchflusssysteme steuern zu können, die dann als Wegwerfartikel, also für einen einmaligen Gebrauch vorgesehen sein können.

Nachfolgend wird die Erfindung anhand von Beispielen weiter erläutert.

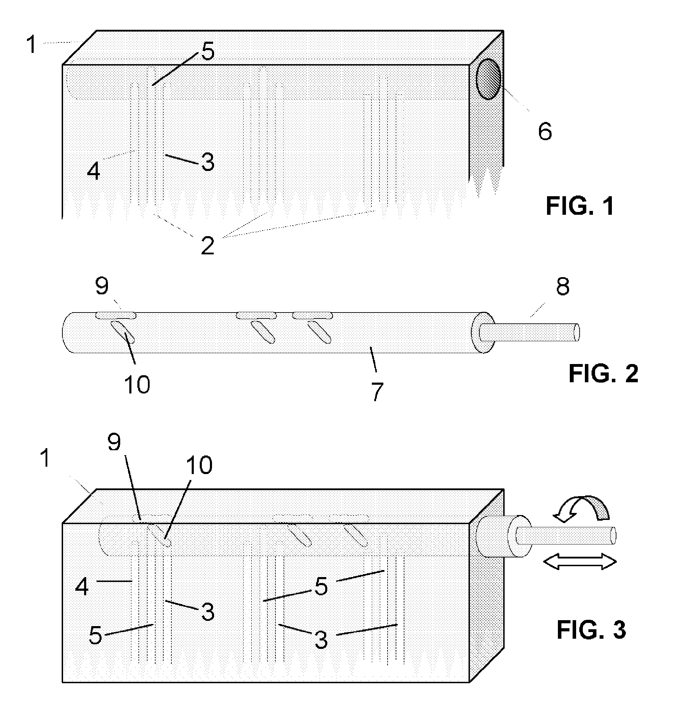

Figur 1 zeigt ein substratförmiges mikrofluidisches Durchflusssystem 1 mit drei Schaltgruppen 2 mit je drei mikrofluidischen Kanälen 3, 4 und 5. Eine jede Schaltgruppe weist einen räumlichen Abstand zu einer anderen Schaltgruppe auf, der größer als die Abstände zwischen Kanalabschnitten innerhalb einer Schaltgruppe ist. Das Durchflusssystem ist mit einer zylinderförmigen Ausnehmung 6 versehen, in die die mikrofluidischen Kanalabschnitte 3, 4 und 5 einmünden. Die in die Ausnehmung 6 einmündenden Enden der mikrofluidischen Kanalabschnitte sind so angeordnet, dass diese die Ecken eines (gedachten) gleichseitigen Dreiecks bilden. Sämtliche drei Seiten des so gebildeten Dreiecks sind also gleich lang. Die Kanäle 3 und 4 einer jeden Schaltgruppe 2 münden entlang einer gedachten geraden Linie ein, die parallel zur Drehachse eines Ventilelements verläuft, der in die Ausnehmung 6 hineingeschoben wird. Die Ausnehmung 6 dient dann als Führung für den Ventilelement.

Die Ausnehmung 6 kann im Inneren des Substrats des Durchflusssystems enden. Um aber den Bewegungsspielraum für einen Ventileinsatz bzw. Ventilelement zu vergrößern, ist die Ausnehmung an beiden Enden vorzugsweise frei zugänglich und führt also vollständig durch das Substrat hindurch. Es ist also dann möglich, das Ventilelement an beiden Enden in die Ausnehmung hinein zu schieben.

Figur 2 zeigt das zugehörige zylinderförmige Ventilelement 7, das an einem Ende mit einem Stab 8 versehen ist. Der Stab 8 wird mit Antriebsmitteln verbunden, um das Ventilelement 7 innerhalb der Ausnehmung 6 verschieben und verdrehen zu können. Auf der Oberfläche des Ventilelements 7 sind insgesamt drei Paare von rinnenförmigen Ausnehmungen bzw. Vertiefungen 9 und 10 vorgesehen, die einen Durchlass bewirken. Eine jede rinnenförmige Ausnehmung 9 verläuft parallel zur Drehachse des Ventilelements 7. Eine jede Ausnehmung 10 verläuft schräg dazu unter einem Winkel von 45°.

In Figur 3 wird der zusammengefügte Zustand gezeigt und zwar ein Schaltzustand, bei dem ein Kanalabschnitt 3 einer hinteren Schaltgruppe durch eine rinnenförmige Ausnehmung 10 mit einem Kanalabschnitt 5 der hinteren Schaltgruppe flüssigkeitsleitend verbunden ist. Da die Paare von rinnenförmigen Ausnehmungen asymmetrisch relativ zu den Schaltgruppen 2 angeordnet sind, gibt es keine weitere flüssigkeitsleitende Verbindung zwischen zwei Kanalabschnitten. Die beiden weiteren Paare von rinnenförmigen Ausnehmungen befinden sich zwischen der vorderen und der mittleren Schaltgruppe 2. Wird nun das Ventilelement 7 geeignet weit in das Substrat hinein geschoben, so wird nicht nur die Verbindung zwischen den Kanalabschnitten 3 und 5 der hinteren Schaltgruppe unterbrochen, sondern durch diese Schiebebewegung werden auch die Kanalabschnitte 3 und 5 der mittleren Schaltgruppe flüssigkeitsleitend miteinander verbunden. Wird alternativ das Ventilelement 7 dagegen geeignet weit aus dem Substrat heraus gezogen, so wird nicht nur die Verbindung zwischen den Kanalabschnitten 3 und 5 der hinteren Schaltgruppe unterbrochen, sondern durch diese Schiebebewegung werden auch die Kanalabschnitte 3 und 5 der vorderen Schaltgruppe flüssigkeitsleitend verbunden. Wird das Ventilelement dagegen geeignet weit gedreht, so wird nicht nur die Verbindung zwischen den Kanalabschnitten 3 und 5 der hinteren Schaltgruppe unterbrochen, sondern durch diese Drehbewegung werden auch die Kanalabschnitte 3 und 4 der hinteren Schaltgruppe flüssigkeitsleitend verbunden. Mit nur einer Bewegung ist es also möglich, eine andere gewünschte flüssigkeitsleitende Verbindung zu schaffen und eine bestehende zu unterbrechen. Weitere Schaltzustände sind durch eine kombinierte Schiebe- und Drehbewegung möglich. Auch ist es möglich, beispielsweise durch eine geeignet kurze Drehbewegung lediglich die in Figur 3 gezeigte, bestehende flüssigkeitsleitende Verbindung zu unterbrechen, ohne andere Verbindungen zu schaffen.

Beispielsweise auf der Rückseite des in Figur 2 gezeigten Ventilelements 7 können weitere drei Paare von rinnenförmigen Ausnehmungen vorgesehen sein, die dann beispielsweise symmetrisch relativ zu den drei Schaltgruppen 2 angeordnet sein können. Werden diese drei nicht gezeigten Paare dann durch geeignete Dreh- und/ oder Schiebebewegungen dazu genutzt, um flüssigkeitsleitende Verbindungen zu schaffen, so können so insgesamt drei flüssigkeitsleitende Verbindungen beispielsweise jeweils zwischen den Kanalabschnitten 3 und 5 zeitgleich bereitgestellt werden. Durch nur eine Bewegung werden diese drei Verbindungen zeitgleich unterbrochen und in Abhängigkeit von der Bewegung im Anschluss daran zeitgleich drei neue Verbindungen beispielsweise zwischen den Kanalabschnitten 3 und 4 geschaffen. Das in Figur 2 gezeigte Ventilelement kann zusätzlich oder alternativ schräg verlaufende rinnenförmige Ausnehmungen umfassen, die flüssigkeitsleitende Verbindungen zwischen wenigstens einem Kanalabschnitt 4 und wenigstens einem Kanalabschnitt 5 schaffen können.

Das in Figur 2 gezeigte Ventilelement kann in einer Ausführungsform mit einer sehr viel längeren rinnenförmigen Ausnehmungen versehen sein, die beispielsweise parallel zur Drehachse des Ventilelements verläuft und mit der ein Kanalabschnitt von einer Schaltgruppe 2 mit einem Kanalabschnitt 2 einer weiteren Schaltgruppe verbunden werden kann.

Die jeweils genannte Anzahl an Schaltgruppen oder Paaren an rinnenförmigen Ausnehmungen können kleiner oder größer sein. Anstelle eines Paares an rinnenförmigen Ausnehmungen können auch mehr rinnenförmige, unterschiedlich verlaufende Ausnehmungen zusammengefasst ein, um so mit möglichst kurzen Bewegungen schnell die verschiedensten Kanalabschnitte miteinander verbinden zu können und zwar zeitgleich und/ oder nacheinander.

Die in den Figuren gezeigte gruppenweise Anordnung von Kanalabschnitten macht zwar die Steuerung übersichtlich. Eine solche gruppenweise Zusammenfassung ist aber nicht zwingend erforderlich. Eine jede Gruppe von Kanalabschnitten kann mehr oder weniger als drei Kanalabschnitte umfassen. Entsprechendes gilt für räumlich zusammengefasste rinnenförmige Vertiefungen.

Das Ventilelement 7 kann ohne weiteres per Spritzguss hergestellt werden, da keine komplizierten, innen liegenden Geometrien zu fertigen sind. Die rinnenförmigen Vertiefungen können mit weichen umlaufenden Lippen auf der Oberfläche umrandet sein, um einen gewünschten dichten Übergang zu gewährleisten. Die Dichtigkeit kann zusätzlich durch die Verwendung besonderer Verfahrenstechnik wie das Mehrkomponenten-Spritzgießen (auch bekannt als 2K-Spritzguss) gewährleistet werden.

Zwar sind seitliche Ausnehmungen im Ventilelement zu bevorzugen, die dann zusammen mit der Innenwand der Führung einen Durchlass bilden. Das Ventilelement kann allerdings auch alternativ oder ergänzend Bohrungen umfassen, die als Durchlass dienen.

Die vorliegende Erfindung bezieht sich insbesondere auf das Gebiet der Diagnostik, beispielsweise um Krankheitserreger zu identifizieren oder zu quantifizieren, Nahrungsmittelkontrollen durchzuführen oder Kampfgase zu ermitteln. Regelmäßig ist es dann erforderlich, eine Flüssigkeit mit Stoffen anzureichern, was mit Hilfe eines Mikrodurchflusssystems geschieht. Die Erfindung trägt dazu bei, dass eine solche Diagnosevorrichtung bereitgestellt werden kann, die als Einweg-Verbrauchsmaterial konzipiert sein kann und die auf einem einzigen Substrat mit einer Grundfläche von beispielsweise nicht größer als eine Kreditkarte untergebracht ist. Eine solche Diagnosevorrichtung kann dann beispielsweise auch einen Biochip umfassen, mit dem gewünschte Analysen durchgeführt werden.

Das Bauteil besteht bevorzugt aus Kunststoff, und zwar insbesondere, wenn es sich um einen Wegwerfartikel handeln soll, also eine zugehörige Diagnosevorrichtung, die als Einweg-Verbrauchsmaterial konzipiert ist. Die Diagnosevorrichtung ist dann ebenfalls überwiegend aus Kunststoff gefertigt. Metall und Glas sind weitere mögliche Materialien, die insbesondere dann verwendet werden, wenn es auf Langlebigkeit ankommen soll. Insbesondere das Ventilelement besteht aus Kunststoff, Metall oder Glas, wobei Kunststoff aus wirtschaftlichen Gründen besonders zu bevorzugen ist.

## Patentansprüche

1. Bauteil (1) für ein Durchflusssystem mit mehreren Kanälen (3, 4, 5) und mit einem Ventilelement (7) für das Öffnen und Schließen von wenigstens einem Kanal, wobei das Ventilelement mit wenigstens einem Durchlass für das Öffnen oder Schließen eines Kanals des Durchflusssystems versehen ist, **dadurch gekennzeichnet, dass** das Ventilelement (7) für das Öffnen und/ oder Schließen von Kanälen sowohl gedreht als auch linear verschoben werden kann.

2. Bauteil nach Anspruch 1 mit einer Führung (6), in dem das Ventilelement (7) geführt wird, wobei die Führung (6) mit Anschlüssen für Kanäle oder Kanalabschnitten (3, 4, 5) versehen ist, die durch den Durchlass miteinander verbunden werden können.

3. Bauteil nach Anspruch 1 oder 2, bei dem das Ventilelement (7) wenigstens zwei voneinander getrennte Durchlässe für das Öffnen oder Schließen von wenigstens zwei verschiedenen Kanälen (3, 4, 5) umfasst.

4. Bauteil nach einem der vorhergehenden Ansprüche, welches so beschaffen ist, dass mit einem Durchlass Flüssigkeit von einem Kanal zu einem anderen Kanal durch Verschieben oder Drehen des Ventilelements (7) transportiert werden kann.

5. Bauteil nach einem der vorhergehenden Ansprüche, wobei das Ventilelement seitlich ein oder mehrere Ausnehmungen (9, 10) aufweist, die zusammen mit einer Innenwand einer Führung (6) einen oder mehrere Durchlässe bilden.

6. Bauteil nach einem der vorhergehenden Ansprüche, wobei das Ventilelement wenigstens eine längliche Ausnehmung (9) aufweist, die parallel zur Drehachse des Ventilelements (7) verläuft, und wenigstens zwei Kanalabschnitte (3, 4, 5) so angeordnet sind, dass diese durch die längliche Ausnehmung (9) miteinander flüssigkeitsleitend verbunden werden können.

7. Bauteil nach einem der vorhergehenden Ansprüche, bei dem wenigstens drei Kanalabschnitte (3, 4) in eine Führung (6) für das Ventilelement so einmünden, dass die Einmündungen der Kanalabschnitte (3, 4) sich dann auf einer ersten geraden Linie befinden, die parallel zur Drehachse des Ventilelements (7) verläuft.

8. Bauteil nach dem vorhergehenden Anspruch mit Einmündungen von weiteren Kanalabschnitten (5) in die Führung (6) hinein, so dass die Einmündungen der weiteren Kanalabschnitte sich dann auf einer zweiten geraden Linie befinden, die parallel zur Drehachse des Ventilelements (7) verläuft.

9. Bauteil nach einem der vorhergehenden Ansprüche, bei dem das Ventilelement (7) wenigstens eine Ausnehmung (10) für das Verbinden von wenigstens zwei Kanalabschnitten (3, 5) umfasst, die länglich ist und die nicht parallel zur Drehachse des Ventilelements (7) verläuft, wobei diese Ausnehmung vorzugsweise einen 45°-Winkel mit der Drehachse des Ventilelements einschließt.

10. Bauteil nach einem der vorgehenden Ansprüche, bei dem das Ventilelement (7) wenigstens drei verschiedenen verlaufende, seitliche Ausnehmungen (9, 10) umfasst.

11. Durchflusssystem mit einem Bauteil nach einem der vorhergehenden Ansprüche umfassend ein Substrat (1) mit darin befindlichen Kanälen (3, 4, 5), wobei die Drehachse des Ventilelements parallel zur Grundfläche des Substrats (1) verläuft.

12. Durchflusssystem nach dem vorhergehenden Anspruch, bei dem ein Antrieb für das Ventilelement mit diesem lösbar verbunden ist und zwar vorzugsweise durch Formschluss.

13. Verfahren für das Betreiben eines Durchflusssystems nach einem der beiden vorhergehenden Ansprüche, indem ein Ventilelement (7) eines Substrats (1) mit einem Antrieb für das Ventilelement lösbar verbunden wird, der Durchfluss mit Hilfe des Antriebs gesteuert wird und nach Beendigung der Durchflüsse das Ventilelement vom Antrieb gelöst wird.
